# EUROPEAN PATENT SPECIFICATION

(11) **EP 4 126 973 B1**
(45) Date of publication and mention of the grant of the patent: **30.10.2024**
(21) Application number: 21721967.4
(22) Date of filing: 29.03.2021
(51) Int. Cl.: C08B 3/24, D21C 11/00

(54) **HYDROLYSIS OF CELLULOSE ESTERS**
HYDROLYSE VON CELLULOSEESTERN
HYDROLYSE D'ESTERS DE CELLULOSE

(30) Priority: 31.03.2020 FI 20205327
(43) Date of publication of application: 08.02.2023
(73) Proprietor: Chempolis Oy, 90660 Oulu (FI)
(72) Inventor: ROUHIAINEN, Maija, 90660 Oulu (FI); PELTOLA, Sirpa, 90660 Oulu (FI); ROUSU, Pasi, 90660 Oulu (FI)
(74) Representative: Kolster Oy Ab
(86) International application number: PCT/FI2021/050219
(87) International publication number: WO 2021/198558

(56) References cited:
- WO-A1-2013/063336
- WO-A1-99/10595
- VIVIDHA DHAPTE ET AL: "Advances in hydrotropic solutions: An updated review", ST. PETERSBURG POLYTECHNICAL UNIVERSITY JOURNAL: PHYSICS AND MATHEMATICS, vol. 1, no. 4, 1 December 2015 (2015-12-01), pages 424 - 435, XP055607559, ISSN: 2405-7223, DOI: 10.1016/j.spjpm.2015.12.006

## Description

### FIELD OF THE INVENTION

The present invention relates to a hydrolysis of cellulose esters which are formed during delignification of a lignocellulosic material in the organosolv pulping. The invention also relates to recovery of cooking chemicals used in the organosolv pulping process.

### BACKGROUND OF THE INVENTION

In organosolv pulping method, lignin is extracted from a lignocellulosic material by using an organic solvent as a cooking liquor. A major portion of lignin, hemicellulose and extractives dissolves into the cooking liquor while cellulose is recovered as a solid fraction. Various organic solvents including alcohols and acids and combinations thereof have been used in the organosolv pulping.

A typical cooking liquor contains formic acid and acetic acid. During cooking, the acids are partly chemically bound to cellulose by forming ester bonds with hydroxyl groups present in the cellulose chain. When formic acid and acetic acid are used in the cooking liquor, cellulose formate and cellulose acetate, respectively, are formed.

For economic and environmental reasons, it is highly desirable that the components of the cooking liquor are extensively recovered and reused in the pulping process of a lignocellulosic material.

WO 99/10595 A1 discloses method for recovery of formic acid which is chemically bound to materials resulting, from industrial chemical processes. The material may be a formic-acid based pulp in which formic acid is bound in the form of cellulose formate. In the method, a part of the free formic acid is first removed with water washing, then the chemically bound formic acid is allowed to react at a content of free formic acid of 3-20%, at a normally pressure, at a temperature of 50-95°C for 0.5-4 hours.

WO 2002/053829 A1 discloses recovery of formic acid and acetic acid used as a cooking liquor in a pulp production. The cooking liquor is evaporated to provide an evaporation residue which contains formic acid and acetic acid. During the evaporation, the acids which are chemically bound to the solids in the cooking liquor are de-esterified to an acid form.

We have now found an enhanced method for recovery of the organic cooking chemicals used in the organosolv pulping of a lignocellulosic material.

### BRIEF DESCRIPTION OF THE INVENTION

The invention provides a method of de-esterification, that is hydrolysis, of cellulose esters formed during organosolv pulping of a lignocellulosic material.

The present invention provides a method for recovery of cooking chemicals used in the organosolv pulping of a lignocellulosic material.

An object of the present invention is to provide a method of hydrolysis of cellulose esters, comprising
- providing a solution containing cellulose esters,
- adding a hydrotropic agent to the solution containing cellulose esters in an amount of about 0.002 wt-% to about 1 wt-% calculated as 100% pure compound, based on the weight of dry cellulose pulp,
- performing hydrolysis of cellulose esters by adding an aqueous solution to the solution containing cellulose esters to provide a mixture containing cellulose and acid(s) derived from cellulose esters, wherein the hydrotropic agent is 3,3'-((2-ethylhexyl)azanediyl)dipropionate.

Another object of the present invention is to provide a method for recovery of cooking chemicals used in the organosolv pulping of a lignocellulosic material, comprising
- providing a solution containing cellulose esters,
- adding a hydrotropic agent to the solution containing cellulose esters, wherein the hydrotropic agent is 3,3'-((2-ethylhexyl)azanediyl)dipropionate,
- performing hydrolysis of cellulose esters by adding an aqueous solution to the solution containing cellulose esters to provide a mixture containing cellulose and acid(s) derived from cellulose esters,
- recovering acid(s) from the mixture.

### BRIEF DESCRIPTION OF THE DRAWING

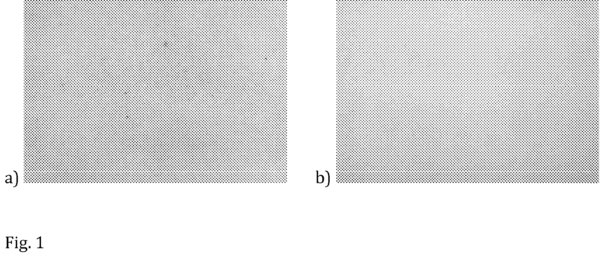

Figure 1 is a photograph showing the effect of the hydrotropic agent on the purity of cellulose.

### DETAILED DESCRIPTION OF THE INVENTION

The present invention provides a method of hydrolysis of cellulose esters, comprising
- providing a solution containing cellulose esters,
- adding a hydrotropic agent to the solution containing cellulose esters in an amount of about 0.002 wt-% to about 1 wt-% calculated as 100% pure compound, based on the weight of dry cellulose pulp,
- performing hydrolysis of cellulose esters by adding an aqueous solution to the solution containing cellulose esters to provide a mixture containing cellulose and acid(s) derived from cellulose esters, wherein the hydrotropic agent is 3,3'-((2-ethylhexyl)azanediyl)dipropionate.

In another aspect, the present invention provides a method for recovery of cooking chemicals used in the organosolv pulping of a lignocellulosic material, comprising
- providing a solution containing cellulose esters,
- adding a hydrotropic agent to the solution containing cellulose esters, wherein the hydrotropic agent is 3,3'-((2-ethylhexyl)azanediyl)dipropionate,
- performing hydrolysis of cellulose esters by adding an aqueous solution to the solution containing cellulose esters to provide a mixture containing cellulose and acid(s) derived from cellulose esters,
- recovering acid(s) from the mixture.

In the inventions, a lignocellulosic material is delignified, i.e. cooked, in an organosolv pulping using an organic solvent as a cooking liquor. Any lignocellulosic material suitable for organosolv pulping can be used as a raw material in the invention. The lignocellulosic material may be, for example, softwood or hardwood, such as birch. Herbaceous plants, such as common reed or reed canary grass pulp, may also be used. Further, agricultural waste materials, such as straw, is applicable. In an embodiment, the lignocellulosic material is biomass of birch, wheat straw, rice straw or bagasse, without limiting thereto.

In an embodiment, the organic solvent, i.e. a cooking liquor, comprises formic acid, acetic acid, furan compound(s) including furfural, and water. In an embodiment, the amount of formic acid of the solvent is in the range of about 30% to about 75% by weight of the solvent. In another embodiment, the amount of formic acid of the solvent is in the range of about 40% to about 55% by weight. In an embodiment, the amount of acetic acid in the solvent is in the range of about 6% to about 55% by weight of the solvent. In an embodiment, the amount of water in the organic solvent is in the range of about 13% to about 22% by weight. In an embodiment, the total amount of furan compounds of the solvent is in the range of about 0.01 to about 3% by weight.

In an embodiment, the density of the organic solvent is in the range of about 1.1 g/cm³ to about 1.2 g/cm³.

During cooking, hydroxy groups of the glucose units in the cellulose chain are partly esterified with the acid(s) of the cooking liquor. When the cooking liquor contains formic acid and acetic acid, the cellulose esters in the form of cellulose formate and cellulose acetate, respectively, are formed.

Hydrolysis of cellulose esters is carried out by adding an aqueous solution to the solution containing cellulose esters whereby pH of the cellulose esters-containing solution is increased. In an embodiment, hydrolysis is carried out at a temperature ranging from about 20°C to about 90°C. In another embodiment, hydrolysis is carried out at about 85°C. In an embodiment, hydrolysis is carried out for about 3 hours to about 16 hours. In another embodiment, hydrolysis is carried out for 16 hours.

In an embodiment, the aqueous solution is water.

During the hydrolysis, the aqueous solution is added to the solution containing cellulose esters so as to provide an acid content of about 4 wt-% to about 14 wt-% to the cellulose containing solution.

Esterification of cellulose and de-esterification, i.e. hydrolysis, of cellulose esters is a chemical equilibrium reaction in which both reactants and products are present. In the present invention, the equilibrium reaction is appropriately shifted to favour the backward reaction in which the reactants, i.e. acids, and the product, i.e., cellulose, are dominant to desirably recover the cooking chemicals for reuse in the organosolv pulping. In addition, hydrolysis provides cellulose that is more applicable than cellulose esters in various applications.

A hydrotropic agent is added to the solution containing cellulose esters. 3,3'-((2-ethylhexyl)azanediyl)dipropionate having a formula below is used as a hydrotropic agent.

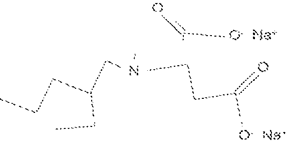

The amount of the hydrotropic agent added to the solution containing cellulose esters varies in the range of about 0.002 wt-% to about 1 wt-% calculated as 100% pure compound, based on the weight of dry cellulose pulp.

It was found that the hydrotropic agent exhibited a metal-chelating effect whereby purer cellulose with a reduced metal content was obtained. Also, the addition of a hydrotropic agent provided a reduced content of extractives in the cellulose and reduced the formation of impurities, such as lignin agglomerates in the cellulose. Cellulose with high purity is suitable for use as a dissolving pulp. Impurities, such agglomerates, cause problems in fouling of the reactors, for example. Use of a hydrotropic agent thus provides cellulose with increased purity and diminishes process technical problems during overall pulping process.

The following example illustrates the invention without limiting the invention thereto.

### Example

106 g of wheat straw with a dry matter content of 93% was delignified at a cooking temperature of 135°C for 35 minutes with a cooking liquor containing 51 wt-% of formic acid, the rest being acetic acid, water and furfural. The cooking liquor was filtered off from the resultant cellulose pulp. 42 g of cellulose pulp was obtained. The cellulose pulp was diluted with deionized water to a consistency of 14%. 0.28 g of 3,3'-((2-ethylhexyl)azanediyl)dipropionate as a 40% aqueous solution corresponding to 0.27% as 100% pure compound based on dry cellulose pulp, was added to the diluted cellulose pulp.

Hydrolysis of cellulose esters was carried out at 85°C for 16 hours. After the hydrolysis, the cellulose pulp was filtered and washed with water.

A reference cellulose pulp was produced in a similar manner except that the hydrotropic agent was not added.

Figure 1 shows the effect of the hydrotropic agent on the purity of the hydrolyzed cellulose pulp. The pulp in Fig.1a is hydrolysed without the hydrotropic agent whereas the pulp in Fig.1b is hydrolysed in the presence of the hydrotropic agent.

Fig.1a shows that impurities seen as black areas remain in the cellulose pulp. In Fig.1b, the cellulose pulp is lighter and purer without visible impurities.

It will be obvious to a person skilled in the art that, as the technology advances, the inventive concept can be implemented in various ways. The invention and its embodiments are not limited to the examples described above but may vary within the scope of the claims.

## Claims

1. A method of hydrolysis of cellulose esters, comprising
- providing a solution containing cellulose esters,
- adding a hydrotropic agent to the solution containing cellulose esters in an amount of about 0.002 wt-% to about 1 wt-% calculated as 100% pure compound, based on the weight of dry cellulose pulp,
- performing hydrolysis of cellulose esters by adding an aqueous solution to the solution containing cellulose esters to provide a mixture containing cellulose and acid(s) derived from cellulose esters,
wherein the hydrotropic agent is 3,3'-((2-ethylhexyl)azanediyl)dipropionate.

2. The method of claim 1, wherein the cellulose esters are esters of cellulose with acid(s) of a cooking liquor used for delignification of a lignocellulosic material.

3. The method of claim 2, wherein the acids of the cooking liquor are formic acid and acetic acid.

4. The method of claim 3, wherein the amount of formic acid in the cooking liquor is in the range of about 30% to about 75% by weight, specifically about 40% to about 55% by weight.

5. The method of claim 3 or 4, wherein amount of acetic acid in the cooking liquor is in the range of about 6% to about 55% by weight.

6. The method of any one of the preceding claims, wherein the solution containing cellulose esters comprises the cooking liquor.

7. The method of any one of the preceding claims, wherein the aqueous solution is added during the hydrolysis of cellulose esters so as to provide an acid content of about 4 wt-% to about 14 wt-% to the cellulose containing solution.

8. The method of any one of the preceding claims, wherein the aqueous solution is water.

9. The method of any one of the preceding claims, wherein the hydrolysis is carried out at a temperature ranging from about 20°C to about 90°C, specifically at about 85°C.

10. The method of any one of the preceding claims, wherein the hydrolysis is carried out for about 3 hours to about 16 hours, specifically for about 16 hours.

11. A method for recovery of cooking chemicals used in the organosolv pulping of a lignocellulosic material, comprising
- providing a solution containing cellulose esters,
- adding a hydrotropic agent to the solution containing cellulose esters,
- performing hydrolysis of cellulose esters by adding an aqueous solution to the solution containing cellulose esters to provide a mixture containing cellulose and acid(s) derived from cellulose esters,
- recovering acid(s) from the mixture
wherein the hydrotropic agent is 3,3'-((2-ethylhexyl)azanediyl)-dipropionate.

12. The method of claim 11, wherein the hydrotropic agent is added in an amount of about 0.002 wt-% to about 1 wt-% calculated as 100% pure compound, based on the weight of dry cellulose pulp.

## Patentansprüche

1. Verfahren zur Hydrolyse von Celluloseestern, umfassend:
- Bereitstellen einer celluloseesterhaltigen Lösung,
- Beimengen eines hydrotropen Mittels zu der celluloseesterhaltigen Lösung in einer Menge von etwa 0,002 Gew.-% bis etwa 1 Gew.-%, berechnet als 100% reine Verbindung, bezogen auf das Gewicht von trockenem Cellulosebrei,
- Durchführen von Hydrolyse von Celluloseestern durch Beimengen einer wässrigen Lösung zu der celluloseesterhaltigen Lösung, um ein Gemisch bereitzustellen, das Cellulose und aus Celloloseestern gewonnene Säure/n enthält,
wobei das hydrotrope Mittel 3,3'-((2-Ethylhexyl)azandiyl)dipropionat ist.

2. Verfahren nach Anspruch 1, wobei die Celluloseester Ester von Cellulose mit Säure/n einer zur Delignifizierung eines lignocellulosehaltigen Materials verwendeten Kochflüssigkeit sind.

3. Verfahren nach Anspruch 2, wobei die Säuren der Kochflüssigkeit Ameisensäure und Essigsäure sind.

4. Verfahren nach Anspruch 3, wobei die Menge an Ameisensäure in der Kochflüssigkeit im Bereich von etwa 30 bis etwa 75 Gew.-%, insbesondere etwa 40 bis 55 Gew.-%, liegt.

5. Verfahren nach Anspruch 3 oder 4, wobei die Menge an Essigsäure in der Kochflüssigkeit im Bereich von etwa 6 bis etwa 55 Gew.-% liegt.

6. Verfahren nach einem der vorhergehenden Ansprüche, wobei die celluloseesterhaltige Lösung die Kochflüssigkeit umfasst.

7. Verfahren nach einem der vorhergehenden Ansprüche, wobei die wässrige Lösung während der Hydrolyse von Celluloseestern beigemengt wird, um der cellulosehaltigen Lösung einen Säuregehalt von etwa 4 Gew.-% bis etwa 14 Gew.-% bereitzustellen.

8. Verfahren nach einem der vorhergehenden Ansprüche, wobei die wässrige Lösung Wasser ist.

9. Verfahren nach einem der vorhergehenden Ansprüche, wobei die Hydrolyse bei einer Temperatur in einem Bereich von etwa 20°C bis etwa 90°C, insbesondere bei etwa 85°C, durchgeführt wird.

10. Verfahren nach einem der vorhergehenden Ansprüche, wobei die Hydrolyse während etwa 3 Stunden bis etwa 16 Stunden, insbesondere während etwa 16 Stunden, durchgeführt wird.

11. Verfahren zur Rückgewinnung von Kochchemikalien, die beim Organsosolv-Aufschluss eines lignocellulosehaltigen Materials verwendet werden, umfassend:
- Bereitstellen einer celluloseesterhaltigen Lösung,
- Beimengen eines hydrotropen Mittels zu der celluloseesterhaltigen Lösung,
- Durchführen von Hydrolyse von Celluloseestern durch Beimengen einer wässrigen Lösung zu der celluloseesterhaltigen Lösung, um ein Gemisch bereitzustellen, das Cellulose und aus Celloloseestern gewonnene Säure/n enthält,
- Rückgewinnen von Säure/n von dem Gemisch
wobei das hydrotrope Mittel 3,3'-((2-Ethylhexyl)azandiyl)dipropionat ist.

12. Verfahren nach Anspruch 11, wobei das hydrotrope Mittel in einer Menge von etwa 0,002 Gew.-% bis etwa 1 Gew.-%, berechnet als 100% reine Verbindung, bezogen auf das Gewicht von trockenem Cellulosebrei, beigemengt wird.

## Revendications

1. Procédé d'hydrolyse d'esters de cellulose, comprenant
- la fourniture d'une solution contenant des esters de cellulose,
- l'addition d'un agent hydrotropique à la solution contenant des esters de cellulose en une quantité d'environ 0,002 % en poids à environ 1 % en poids, calculée pour 100 % de composé pur, par rapport au poids de la pâte de cellulose sèche,
- la mise en œuvre d'une hydrolyse d'esters de cellulose par addition d'une solution aqueuse à la solution contenant des esters de cellulose pour fournir un mélange contenant de la cellulose et un ou plusieurs acides dérivés d'esters de cellulose,
dans lequel l'agent hydrotropique est le dipropionate de 3,3'-((2-éthylhexyl)azanediyle).

2. Procédé selon la revendication 1, dans lequel les esters de cellulose sont des esters de cellulose avec un ou plusieurs acides d'une liqueur de cuisson utilisée pour la délignification d'un matériau lignocellulosique.

3. Procédé selon la revendication 2, dans lequel les acides de la liqueur de cuisson sont l'acide formique et l'acide acétique.

4. Procédé selon la revendication 3, dans lequel la quantité d'acide formique dans la liqueur de cuisson est située dans la plage allant d'environ 30 % à environ 75 % en poids, spécifiquement d'environ 40 % à environ 55 % en poids.

5. Procédé selon la revendication 3 ou 4, dans lequel la quantité d'acide acétique dans la liqueur de cuisson est située dans la plage allant d'environ 6 % à environ 55 % en poids.

6. Procédé selon l'une quelconque des revendications précédentes, dans lequel la solution contenant des esters de cellulose comprend la liqueur de cuisson.

7. Procédé selon l'une quelconque des revendications précédentes, dans lequel la solution aqueuse est ajoutée pendant l'hydrolyse d'esters de cellulose de façon à fournir une teneur en acide d'environ 4 % en poids à environ 14 % en poids à la solution contenant de la cellulose.

8. Procédé selon l'une quelconque des revendications précédentes, dans lequel la solution aqueuse est de l'eau.

9. Procédé selon l'une quelconque des revendications précédentes, dans lequel l'hydrolyse est mise en œuvre à une température située dans la plage allant d'environ 20 °C à environ 90 °C, spécifiquement à environ 85 °C.

10. Procédé selon l'une quelconque des revendications précédentes, dans lequel l'hydrolyse est mise en œuvre pendant environ 3 heures à environ 16 heures, spécifiquement pendant environ 16 heures.

11. Procédé pour récupérer des produits chimiques de cuisson utilisés dans une production de pâte Organosolv d'un matériau lignocellulosique, comprenant
- la fourniture d'une solution contenant des esters de cellulose,
- l'addition d'un agent hydrotropique à la solution contenant des esters de cellulose,
- la mise en œuvre d'une hydrolyse d'esters de cellulose par addition d'une solution aqueuse à la solution contenant des esters de cellulose pour fournir un mélange contenant de la cellulose et un ou plusieurs acides dérivés d'esters de cellulose,
- la récupération du ou des acides à partir du mélange,
dans lequel l'agent hydrotropique est le dipropionate de 3,3'-((2-éthylhexyl)azanediyle).

12. Procédé selon la revendication 11, dans lequel l'agent hydrotropique est ajouté en une quantité d'environ 0,002 % en poids à environ 1 % en poids, calculée pour 100 % de composé pur, par rapport au poids de la pâte de cellulose sèche.
